# FASCICULE DE BREVET EUROPEEN

(11) **EP 2 156 538 B1**
(45) Date de publication et mention de la délivrance du brevet: **19.09.2012**
(21) Numéro de dépôt: 08805548.8
(22) Date de dépôt: 07.05.2008
(51) Int. Cl.: H02K 33/04, H01F 7/16

(54) **ACTIONNEUR ÉLECTROMAGNÉTIQUE À RÉLUCTANCE VARIABLE**
ELEKTROMAGNETISCHER AKTOR MIT VARIABLER RELUKTANZ
ELECTROMAGNETIC ACTUATOR WITH VARIABLE RELUCTANCE

(30) Priorité: 11.05.2007 FR 0703382
(43) Date de publication de la demande: 24.02.2010
(73) Titulaire: Centre National d'Etudes Spatiales (C.N.E.S.), 75039 Paris Cedex 01 (FR)
(72) Inventeur: VANNIER, Jean-Claude, F-92240 Malakoff (FR); DUGUÉ, François, F-31450 Pompertuzat (FR); ROUX, François, F-31590 Gauré (FR); GIBEK, Isabelle, F-31240 l'Union (FR); SCHWANDER, Denis, F-31860 Labarthe Sur Leze (FR)
(74) Mandataire: Cabinet BARRE LAFORGUE & associés
(86) Numéro de dépôt international: PCT/FR2008/000642
(87) Numéro de publication internationale: WO 2008/152237

(56) Documents cités:
- EP-A- 0 795 881
- WO-A-91/06109
- DE-A1- 19 924 673
- DE-A1- 19 924 813
- DE-B3-102004 032 229
- GB-A- 2 201 039
- US-A- 5 207 410
- US-A1- 2001 030 307

## Description

L'invention concerne un actionneur électromagnétique à réluctance variable à déplacement linéaire.

EP 1 250 526 décrit une électropompe comprenant un actionneur alternatif à réluctance variable adapté pour entraîner une pompe à hydrazine pour l'alimentation en carburant d'un système de propulsion d'un satellite. EP 1 250 526 indique qu'un tel actionneur est adapté pour être commandé à une fréquence supérieure à 100 Hz, notamment voisine de 200 Hz.

L'actionneur décrit dans EP 1 250 526 donne entière satisfaction pour des débits moyens de la pompe. Néanmoins, pour les débits les plus élevés de la pompe, il est nécessaire de faire passer un flux d'induction magnétique à une fréquence élevée, de l'ordre de 100 à 300 Hz et avec un bon niveau d'induction pour produire la force nécessaire à la création de la force d'entraînement de la pompe. Les matériaux ferromagnétiques étant électriquement conducteurs, les courants de Foucault induits par ces variations d'induction conduisent à des pertes de puissance et de limitation des amplitudes des variations de flux. L'actionneur décrit dans EP 1 250 526 propose pour augmenter la résistance électrique du circuit magnétique de recourir à un feuilletage du circuit magnétique (empilage de tôles isolées les unes des autres par des couches de vernis ou par oxydation). Cette solution présente différents inconvénients.

Un premier inconvénient réside dans le fait que le feuilletage se prête mal à une réalisation mécanique précise. Or, dans de nombreuses applications, en particulier à bord d'un véhicule, notamment à bord de systèmes spatiaux tels que des satellites, on est en permanence à la recherche de l'encombrement minimal. Dès lors, il convient d'optimiser le volume de l'actionneur, ce qui implique une réalisation mécanique très précise.

Un autre inconvénient du feuilletage est qu'il présente une durée de vie limitée, et peut être sujet à des phénomènes de vieillissement anticipé ou mal contrôlé, compte tenu de la présence de vernis. Cela est vrai en particulier lorsque l'actionneur subit des vibrations et/ou est placé dans un environnement agressif, par exemple dans le vide spatial. En conséquence, la présence d'un feuilletage limite la durée de vie d'un tel actionneur et ne permet pas de garantir une durée de vie importante.

De plus, un feuilletage fragilise la structure mécanique de l'actionneur et ne permet pas un usinage de précision, ce qui empêche notamment la réalisation de très faibles entrefers. Dès lors, un tel actionneur ne peut pas être utilisé à pleine puissance, en particulier à faible entrefer, tant du fait des risques d'amorce de fissuration que du fait des irrégularités de surface.

Il a été proposé, par exemple dans EP 1 250 526 et US 4 673 163, de recourir à un actionneur comprenant des armatures massives dotées d'au moins une fente s'étendant radialement de façon à s'opposer à la propagation des courants de Foucault.

Cette solution permet de pallier les inconvénients du feuilletage. En revanche, les pertes énergétiques dans les armatures, notamment celles induites par la propagation des courants de Foucault, sont alors trop importantes pour permettre le développement de forces suffisantes, et rendent à ce titre un tel actionneur incompatible avec de nombreuses applications, notamment à bord de véhicules, en particulier des véhicules spatiaux.

Les actionneurs de l'art antérieur mettent en exergue qu'un feuilletage produit deux phénomènes a priori contradictoires. En effet, un feuilletage permet d'une part de limiter les pertes énergétiques, ce qui contribue à assurer le développement d'une force suffisante ; mais d'autre part réduit la résistance mécanique de l'actionneur. Le document WO 91/06 109 divulgue un électroaimant utilisé dans des injecteurs de carburant.

Dès lors, jusqu'à maintenant, il fallait faire un choix entre un actionneur résistant mais de rendement et de puissance volumique limités par des pertes par courants de Foucault relativement importants, et un actionneur présentant peu de pertes par courants de Foucault, mais de puissance volumique limitée par la faible résistance mécanique des armatures.

Le but de l'invention est de fournir un actionneur électromagnétique permettant de pallier ces inconvénients.

A ce titre, l'invention vise un actionneur électromagnétique à réluctance variable capable de développer des efforts importants par unité de volume ou de masse de l'actionneur -notamment plus importants que les actionneurs connus- et dans lequel les pertes par courants de Foucault sont faibles.

L'invention vise aussi à proposer un actionneur électromagnétique adapté pour être utilisé dans des applications embarquées à bord d'engins à déplacement terrestre et/ou aquatique et/ou aérien et/ou spatial.

L'invention vise aussi à proposer un tel actionneur électromagnétique qui soit compact et léger.

L'invention vise aussi à proposer un actionneur électromagnétique adapté pour développer des efforts importants, notamment des forces de l'ordre de 150 à 250 N pour une course d'environ 1 mm et pouvant présenter un volume inférieur à 150 cm³, dans lequel les pertes par hystérésis sont réduites -notamment non significatives-.

Pour ce faire, l'invention concerne un actionneur électromagnétique à réluctance variable comprenant :
- un corps d'actionneur,
- une armature ferromagnétique fixée audit corps d'actionneur, dite armature fixe, comprenant au moins deux cylindres de révolution concentriques, dits respectivement cylindre intérieur et cylindre extérieur, espacés radialement l'un de l'autre et s'étendant le long d'un axe, dit axe d'actionneur, lesdits cylindres intérieur et extérieur étant reliés par une couronne de liaison s'étendant dans un plan orthogonal audit axe d'actionneur,
- au moins un bobinage d'aimantation agencé entre lesdits cylindres intérieur et extérieur,
- au moins une armature mobile ferromagnétique agencée en regard d'un extrémité axiale de ladite armature fixe, dite extrémité d'entrefer, chaque armature mobile étant guidée en translations alternatives par

rapport à ladite armature fixe le long dudit axe d'actionneur, avec laquelle elle définit un circuit magnétique avec un entrefer dont la dimension varie au cours des translations alternatives de cette armature mobile par rapport à l'armature fixe,
caractérisé en ce que ladite armature fixe comprend au moins deux séries de fentes, une première série de fentes ménagées radialement dans ledit cylindre extérieur et s'étendant sur toute la hauteur dudit cylindre extérieur et une deuxième série de fentes ménagées radialement dans lesdits cylindres extérieur et intérieur et s'étendant uniquement sur une partie de la hauteur desdits cylindres à partir de chaque extrémité d'entrefer, de telle sorte que des portions non fendues de l'armature fixe soient éloignées de chaque entrefer, chaque fente de ladite deuxième série de fentes étant intercalée entre deux fentes de ladite première série de fentes.

Les inventeurs ont déterminé qu'un actionneur présentant une telle structure, bien que pouvant paraître de prime abord extrêmement fragile, est en réalité très résistant, et en tout état de cause suffisamment résistant pour endurer des efforts répétés pour pouvoir exploiter toute la puissance électrique disponible La double série de fentes permet d'augmenter, à l'instar d'un feuilletage, la résistance électrique du circuit magnétique traversé par les courants induits par les variations d'induction, ce qui permet d'empêcher la propagation des courants de Foucault. En revanche, contrairement au feuilletage, ces fentes sont directement réalisées dans la masse, par exemple par électroérosion, ce qui permet une mécanique de précision et surtout préserve l'intégrité mécanique de l'armature fixe. L'architecture à double série de fentes, dont une série s'étend intégralement sur toute la hauteur du cylindre extérieur, implique que les fentes s'étendent pratiquement dans toutes les zones parcourues par du flux magnétique et que les portions non fendues, très peu nombreuses, sont sensiblement non parcourues par du flux magnétique. Au moins une série de fentes ne s'étend pas intégralement sur toute la hauteur des cylindres pour pouvoir constituer une portion non fendue qui permette le maintien de la structure générale de l'armature. Cette portion non fendue est agencée à l'opposé de l'entrefer.

Avantageusement et selon l'invention, ladite première série de fentes de ladite armature fixe s'étend également sur une portion radiale de ladite couronne de liaison, sur toute sa hauteur.

Les inventeurs ont également déterminé qu'il est possible de ménager des fentes dans ladite couronne de liaison reliant les cylindres intérieur et extérieur de l'armature fixe sans néanmoins fragiliser notablement l'armature. Une telle solution s'avère particulièrement efficace étant donné que l'armature fixe présente ainsi des fentes qui s'étendent dans toutes les zones parcourues par le flux magnétique, à l'exception uniquement d'une portion d'armature agencée à l'opposé de l'entrefer.

Avantageusement et selon l'invention, ladite deuxième série de fentes de ladite armature fixe s'étend également radialement uniquement sur une partie de la hauteur de ladite couronne de liaison.

Une telle structure permet de fournir une armature fixe qui comprend des fentes dans toutes les zones où le flux magnétique circule, à l'exception d'une portion centrale de la couronne de liaison délimitée radialement par une paroi intérieure du cylindre intérieur et l'extrémité radiale des fentes de la première série de fentes et longitudinalement le long dudit axe d'actionneur, par une extrémité de la couronne de liaison et l'extrémité des fentes de la deuxième série de fentes opposée à l'entrefer. A noter par ailleurs que cette portion de la couronne de liaison non fendue est agencée à distance de chaque entrefer du circuit magnétique.

La couronne de liaison reliant les cylindres intérieur et extérieur peut être agencée dans n'importe quel plan orthogonal à l'axe d'actionneur entre les extrémités axiales des cylindres de l'armature fixe. En particulier, dans le cas où l'actionneur comprend deux armatures mobiles agencées respectivement en regard de chacune des extrémités axiales de l'armature fixe, cette couronne de liaison est avantageusement agencée de telle sorte qu'elle s'étend dans le plan médian des cylindres intérieur et extérieur orthogonal à l'axe d'actionneur. Dans le cas le plus courant où l'actionneur comprend une unique armature mobile en regard d'une extrémité axiale de l'armature fixe avec laquelle elle forme un circuit magnétique avec un seul entrefer, la couronne de liaison reliant les cylindres intérieur et extérieur s'étend de préférence dans un plan agencé à l'extrémité axiale opposée à l'entrefer.

Ainsi, avantageusement, un actionneur selon l'invention comprend une seule armature mobile agencée en regard d'une extrémité axiale de ladite armature fixe, dite extrémité d'entrefer, avec laquelle elle définit un circuit magnétique avec un seul entrefer, lesdits cylindres intérieur et extérieur de ladite armature fixe étant reliés au niveau de l'extrémité axiale opposée à ladite extrémité d'entrefer par ladite couronne de liaison.

Dans ce cas, la portion non fendue de la couronne de liaison est agencée à une extrémité axiale de l'armature fixe.

Cette portion centrale non fendue assure le maintien mécanique des cylindres intérieur et extérieur fendus.

Les fentes de la deuxième série de fentes de l'armature fixe peuvent s'étendre axialement plus ou moins dans les cylindres intérieur et extérieur, à partir de l'extrémité d'entrefer. La longueur des fentes le long dudit axe d'actionneur peut être optimisée pour d'une part limiter la propagation des courants de Foucault, et d'autre part conserver l'intégrité mécanique de l'armature fixe.

Avantageusement et selon l'invention, chaque fente de chaque série de fentes s'étend parallèlement audit axe d'actionneur.

Avantageusement et selon l'invention, chaque fente de ladite deuxième série de fentes de ladite armature fixe s'étend sur plus de 80% de la hauteur des cylindres intérieur et extérieur.

Ce rapport entre la longueur des cylindres et la longueur des fentes de la deuxième série de fentes permet d'assurer que les portions de l'armature non fendues ne représentent pas plus de 20% de l'armature totale.

Avantageusement et selon l'invention, au moins une armature mobile -notamment chaque armature mobile- est discoïdale et présente au moins une série de fentes radiales ménagées uniquement sur une partie radiale de cette armature sur toute la hauteur de cette armature mobile.

A l'instar de l'armature fixe, les inventeurs ont déterminé qu'une armature mobile peut en combinaison avec l'armature fixe présenter au moins une série de fentes ménagées uniquement sur une partie radiale de l'armature mobile sans néanmoins fragiliser l'armature. Les découpes permettant de créer les fentes sont avantageusement réalisées par électroérosion.

Avantageusement et selon l'invention, chaque fente de ladite première série de fentes d'au moins une armature mobile -notamment chaque armature mobile- s'étend radialement sur plus de 30 % du rayon de l'armature mobile.

Une armature mobile peut comprendre une ou plusieurs séries de fentes.

Avantageusement et selon l'invention, au moins une armature mobile -notamment chaque armature mobile- comprend au moins une deuxième série de fentes ménagées uniquement sur une partie radiale de cette armature mobile sur toute la hauteur de cette armature mobile, chaque fente de ladite deuxième série de fentes de cette armature mobile s'étendant radialement sur plus de 60 % du rayon de cette armature mobile.

Avantageusement et selon l'invention, au moins une armature mobile -notamment chaque armature mobile- comprend au moins une troisième série de fentes ménagées uniquement sur une partie radiale de cette armature mobile sur toute la hauteur de cette armature mobile, chaque fente de ladite troisième série de fentes de cette armature mobile s'étendant radialement sur plus de 75 % du rayon de cette armature mobile.

Un tel actionneur présente ainsi des performances électromagnétiques similaires à celles d'un actionneur présentant un feuilletage, voire meilleures, et des performances mécaniques similaires à celles d'un actionneur massif. En revanche, il présente des performances mécaniques nettement supérieures à celles d'un actionneur présentant un feuilletage et des performances électromagnétiques nettement supérieures à celles d'un actionneur massif. Un actionneur selon l'invention peut ainsi présenter des dimensions optimisées, un poids et une durée de vie compatibles avec des applications embarquées, notamment spatiales. Un actionneur selon l'invention peut générer une puissance par unité de volume et/ou de masse nettement supérieure aux actionneurs de l'art antérieur, et présente un rendement énergétique optimal.

L'armature fixe selon l'invention est une armature réalisée de préférence par électroérosion qui présente deux cylindres concentriques entre lesquels est logé le bobinage d'aimantation. De même, l'armature mobile est discoïdale et est de préférence réalisée par électroérosion.

Avantageusement et selon l'invention, au moins une armature mobile -notamment chaque armature mobile- est discoïdale et présente un diamètre sensiblement égal au diamètre dudit cylindre extérieur de ladite armature fixe.

Les armatures d'un actionneur selon l'invention peuvent être réalisées en tout type de matériau ferromagnétique. Il est connu que dans le cadre d'un circuit magnétique soumis à un champ magnétique à haute fréquence, les pertes par hystérésis sont limitées par l'utilisation de matériaux à cycle étroit, tel que les matériaux nanocristallins. Les armatures d'un actionneur selon l'invention peuvent également être réalisées en fer doux, en acier XC 10, en AISI 430, en tout type d'alliage de métaux, etc. Néanmoins, les expériences ont démontré que les pertes magnétiques générées par l'utilisation de certains de ces matériaux, notamment le fer doux, peuvent être importantes.

Ainsi, avantageusement et selon l'invention, ladite armature fixe est réalisée en un alliage fer-nickel comprenant du fer et du nickel en proportions sensiblement identiques. Il s'agit d'un alliage à très faible hystérésis associé à une induction à saturation relativement élevée. Il présente une perméabilité initiale relative de 7 500.

De même, une armature mobile peut également être réalisée en tout type de matériau. Néanmoins, avantageusement et selon l'invention, au moins une armature mobile -notamment chaque armature mobile-est réalisée en un alliage fer-nickel comprenant du fer et du nickel en proportions sensiblement identiques.

Différents types de bobinages peuvent être utilisés dans un actionneur selon l'invention. Le nombre de spires de ces bobinages, la section de chaque spire et l'alimentation de ces bobinages dépendent de l'utilisation envisagée.

Un actionneur selon l'invention peut par exemple être utilisé pour entraîner une pompe à carburant pour l'alimentation d'un système de propulsion d'un satellite. Pour ce faire, les inventeurs ont déterminé les volumes et sections de l'actionneur permettant d'optimiser l'encombrement de l'actionneur, à pompe et performance données. L'ensemble des dimensions dérive d'une part du diamètre de la tige de la pompe à entraîner et d'autre part de la force à développer par la mise en action de la pompe.

Avantageusement et selon l'invention, l'épaisseur d'au moins une armature mobile -notamment chaque armature mobile- est sensiblement égale à l'épaisseur de ladite couronne d'extrémité reliant ledit cylindre intérieur et ledit cylindre extérieur.

Les fentes ménagées dans les différentes armatures peuvent présenter différentes dimensions. Ces dernières doivent permettre de limiter les courants de Foucault tout en maintenant l'intégrité mécanique des armatures.

Avantageusement et selon l'invention, pour chacune des armatures fixe et mobile, les fentes sont réalisées de telle sorte que chaque portion d'armature entre deux fentes adjacentes, dite lame d'armature, présente des dimensions adaptées pour que le premier mode propre en flexion de cette lame soit de fréquence supérieure à la fréquence de fonctionnement de l'actionneur.

Les fréquences d'utilisation d'un actionneur selon l'invention sont de l'ordre de 100 Hz à 300 Hz. Dès lors, les dimensions des lames d'armature sont déterminées de telle sorte que les premiers modes propres en flexion dans l'axe de la plus petite et de la plus grande inertie soient respectivement de l'ordre de 1 000 Hz et de plus de 3 000 Hz.

La répartition des fentes dans les armatures peut changer d'une application à une autre.

Néanmoins, avantageusement et selon l'invention, pour chacune des armatures fixe et mobile, lesdites fentes sont uniformément réparties sur toute la périphérie de cette armature.

Le décalage angulaire entre deux fentes peut être adapté pour chaque application, en fonction des contraintes mécaniques et magnétiques poursuivies.

Néanmoins, avantageusement et selon l'invention, deux fentes adjacentes dudit cylindre extérieur sont séparées angulairement d'au moins 3°, notamment de 3,75°.

Les inventeurs ont déterminé que cette répartition des fentes permet de limiter les courants de Foucault tout en maintenant l'intégrité mécanique du cylindre extérieur de l'armature fixe.

De même, avantageusement et selon l'invention, deux fentes adjacentes d'au moins une armature mobile -notamment de chaque armature mobile- sont séparées angulairement d'au moins 3°, notamment de 3,75°.

La largeur de chacune des fentes peut être choisie selon l'application visée.

Néanmoins, avantageusement et selon l'invention, chaque fente présente une largeur d'au moins 0,3 mm, notamment de 0,37 mm.

Les inventeurs ont déterminé que de telles fentes permettent de limiter les courants de Foucault tout en maintenant l'intégrité mécanique des armatures.

Un actionneur électromagnétique selon l'invention présente un circuit magnétique axisymétrique, ce qui permet d'utiliser la totalité du champ électromagnétique généré par une bobine cylindrique ménagée entre les cylindres intérieur et extérieur de l'armature fixe de cet actionneur.

De plus, un actionneur selon l'invention permet de supporter des écarts thermiques importants sans générer de contraintes thermo-élastiques. En particulier, un actionneur selon l'invention peut supporter des chocs thermiques, ce qui autorise l'utilisation d'un tel actionneur sur des plages étendues de température. Dès lors, un actionneur selon l'invention peut être embarqué à bord de divers engins, à déplacement terrestre et/ou aquatique et/ou aérien et/ou spatial, destinés à évoluer dans des conditions diverses sans nécessiter de modification spécifique de la structure de l'actionneur, ni d'adaptation de l'environnement au sein duquel est placé l'actionneur.

L'invention concerne en outre un actionneur électromagnétique à réluctance variable caractérisé en combinaison par tout ou partie des caractéristiques mentionnées ci-dessus ou ci-après.

D'autres caractéristiques, buts et avantages de l'invention apparaîtront à la lecture de la description suivante qui présente à titre d'exemple non limitatif un mode de réalisation de l'invention, en référence aux dessins annexés ; sur ces dessins :
- la figure 1 est une vue schématique en perspective d'un actionneur selon un mode de réalisation de l'invention,
- la figure 2 est une vue schématique en perspective d'une armature fixe d'un actionneur selon un mode de réalisation de l'invention,
- la figure 3 est une vue schématique en perspective d'une armature mobile d'un actionneur selon un mode de réalisation de l'invention,
- la figure 4 est une vue schématique en perspective d'une armature fixe d'un actionneur selon un mode de réalisation de l'invention portant un bobinage d'aimantation,
- la figure 5 est une vue schématique en coupe longitudinale à plans sécants de l'armature fixe de la figure 2.

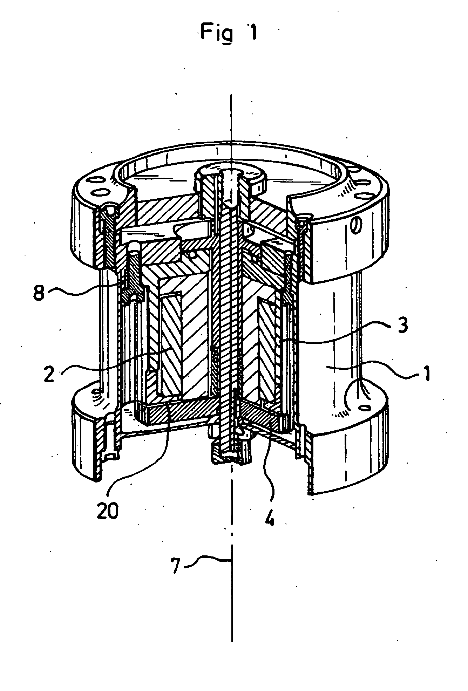

Un actionneur électromagnétique à réluctance variable selon l'invention comprend, tel que représenté sur la figure 1, un corps 1 d'actionneur, un noyau magnétique et un bobinage 2 d'aimantation. Le noyau magnétique comprend une armature 3 fixée au corps 1 d'actionneur par l'intermédiaire de pattes 8 de fixation et une armature 4 mobile par rapport à l'armature 3 fixe. L'armature 3 fixe, l'armature 4 mobile et le bobinage 2 d'aimantation forme un circuit magnétique avec entrefer 20 dont la dimension varie par déplacement de l'armature 4 mobile par rapport à l'armature 3 fixe.

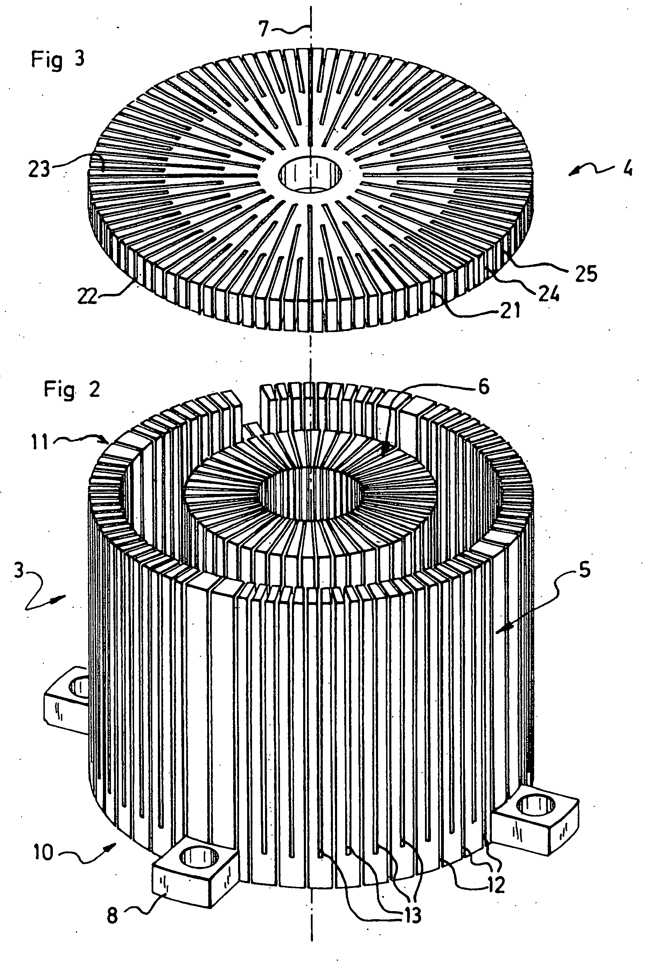

L'armature 3 fixe comprend selon l'invention, et tel que représenté notamment sur la figure 2, au moins deux cylindres de révolution concentriques espacés radialement l'un de l'autre, un cylindre 5 extérieur et un cylindre 6 intérieur. Les cylindres 5 extérieur et 6 intérieur s'étendent le long d'un axe, dit axe 7 d'actionneur. Cet axe 7 d'actionneur correspond à l'axe de guidage en translations alternatives de l'armature 4 mobile par rapport à l'armature 3 fixe. Les cylindres 5 extérieur et 6 intérieur sont reliés à une de leur extrémité axiale, dite extrémité 10 de liaison, par une couronne 9 de liaison.

Selon le mode de réalisation des figures, l'actionneur comprend une seule armature 4 mobile agencée en regard d'une extrémité axiale des cylindres 5 extérieur et 6 intérieur, dite extrémité 11 d'entrefer, opposée à l'extrémité 10 de liaison où s'étend la couronne 9 de liaison.

Néanmoins, selon d'autres modes de réalisation de l'invention, un actionneur peut comprendre deux armatures mobiles agencées en regard de chacune des extrémités axiales de l'armature fixe définissant ainsi deux entrefers. Selon ce mode de réalisation, la couronne de liaison s'étend de préférence au voisinage d'un plan médian de l'armature fixe, agencée à mi-distance entre les deux entrefers.

De préférence, les pattes 8 de fixation de l'armature 3 fixe sur le corps 1 d'actionneur s'étendent dans un plan orthogonal audit axe 7 d'actionneur qui comprend au moins en partie la couronne 9 liaison.

A noter que l'armature fixe tel que représentée sur les figures 2, 4 et 5 est retournée par rapport à sa représentation sur la figure 1.

Le cylindre 6 intérieur comprend une paroi 15 intérieure et une paroi 17 extérieure. Le cylindre 5 extérieur comprend une paroi 18 intérieure en regard de la paroi 17 extérieure du cylindre 6 intérieur et espacée de cette dernière, et une paroi 16 extérieure.

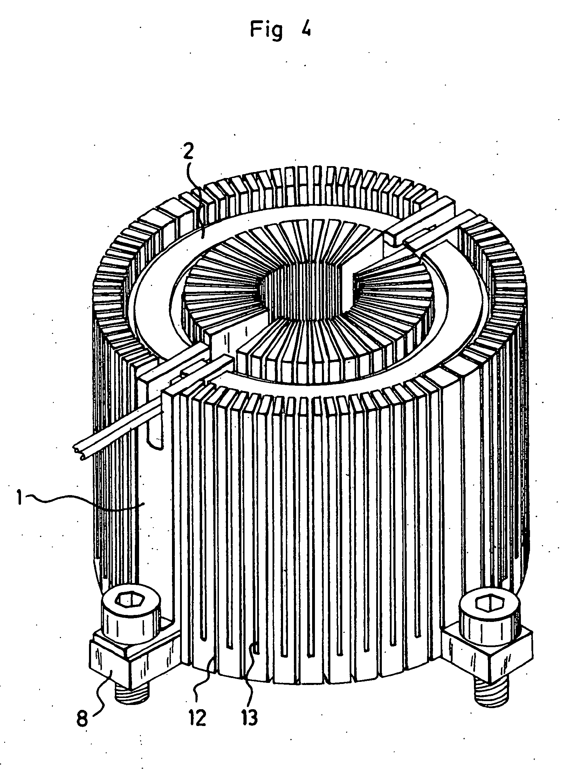

Le bobinage 2 d'aimantation d'un actionneur selon l'invention est agencé entre la paroi 17 extérieure du cylindre 6 intérieur et la paroi 18 intérieure du cylindre 5 extérieur. Tout type de bobinage peut être utilisé pour la réalisation d'un actionneur selon l'invention. Par exemple, le bobinage peut être une bobine de 168 spires en fil de 0,9 mm prévue pour fonctionner à 50 V ou une bobine de 328 spires en fil de 0,56 mm prévue pour fonctionner à 100V. Bien entendu, d'autres types de bobinage peuvent être utilisés selon le type d'application poursuivie. La figure 4 présente un bobinage 2 selon l'invention logé entre les cylindres 6 intérieur et 5 extérieur de l'armature 3 fixe selon l'invention.

Selon l'invention, l'armature 3 fixe comprend une première série dé fentes 12 ménagées radialement dans le cylindre 5 extérieur, chaque fente 12 débouchant sur la paroi 18 intérieure et sur la paroi 16 extérieure du cylindre 5 extérieur. Par ailleurs, chaque fente 12 s'étend sur toute la hauteur du cylindre 5 extérieur parallèlement à l'axe 7 d'actionneur. Chaque fente s'étend ainsi dans un plan radial. Le cylindre 5 extérieur est donc intégralement découpé par la première série de fentes 12. Les fentes 12 sont avantageusement uniformément réparties sur le cylindre 5 extérieur. Le nombre de fentes 12 dépend du diamètre du cylindre 5 et de l'application visée par l'actionneur. Selon le mode de réalisation des figures, deux fentes 12 adjacentes sont séparées d'un angle de 7,5°. Bien entendu, selon d'autres modes de réalisation, les fentes 12 peuvent être séparées d'un angle supérieur ou inférieur à l'angle précité. Chaque fente étant de préférence réalisée par électroérosion, elle présente une largeur constante.

Selon le mode de réalisation des figures, l'armature 3 fixe comprend également une deuxième série de fentes 13 ménagées radialement conjointement dans les cylindres 5 extérieur et 6 intérieur. Chaque fente 13 s'étend radialement de la paroi 15 intérieure du cylindre 6 intérieur à la paroi 16 extérieure du cylindre 5 extérieur. En revanche, contrairement aux fentes 12 de la première série de fentes, chaque fente 13 s'étend uniquement sur une portion de la hauteur des cylindres 5 extérieur et 6 intérieur. Chaque fente 13 débouche vers l'extrémité 11 d'entrefer. Ainsi, chaque fente 13 est ménagée entre l'extrémité 11 d'entrefer des cylindres 5, 6 et une zone au voisinage de l'extrémité 10 de liaison des cylindres. Les dimensions des portions des cylindres non fendus par ces fentes 13 dépendent de l'application visée.

Selon le mode de réalisation des figures, la hauteur selon l'axe 7 d'actionneur des portions de cylindres 5 et 6 non parcourues par les fentes 13 n'excède pas 15 % de la hauteur totale des cylindres 5 et 6.

Par exemple, les cylindres 5 et 6 peuvent présenter chacun une hauteur de 39 mm, les fentes 12 s'étendent sur toute la hauteur du cylindre 5 extérieur et les fentes 13 s'étendent uniquement sur 33 mm de la hauteur des cylindres 5 et 6.

Ces découpes dans l'armature 3 fixe sont de préférence réalisées par électroérosion.

Selon le mode de réalisation des figures, les fentes 12 s'étendent également sur une portion radiale de la couronne 9 d'extrémité sur toute la hauteur de cette couronne 9 d'extrémité alors que les fentes 13 s'étendent radialement de la paroi 15 intérieure du cylindre 6 intérieur à la paroi 16 extérieure du cylindre 5 extérieur, uniquement sur une portion de la hauteur de la couronne 9 d'extrémité.

Cette architecture permet d'assurer une découpe quasi uniforme de l'armature 3 fixe à l'exception d'une portion 14 centrale non fendue délimitée radialement par la paroi 15 intérieure du cylindre 5 intérieur et l'extrémité 16 radiale des fentes 12 de la première série de fentes 12, et longitudinalement le long dudit axe 7 d'actionneur, par ladite extrémité 10 de liaison et l'extrémité des fentes 13 de la deuxième série de fentes 13 opposée à l'extrémité 11 d'entrefer. Cette portion 14 centrale non fendue est agencée à l'opposée de l'entrefer 20 du circuit magnétique ainsi réalisé.

Chaque paire de fentes immédiatement adjacentes définit une lame d'armature.

Cette portion 14 non fendue permet de maintenir l'intégrité mécanique de l'armature 3 fixe en faisant office de zone de ramification des différentes lames de l'armature fixe. Les inventeurs ont déterminé que cette portion 14 centrale non fendue est suffisante pour assurer l'intégrité mécanique de l'armature 3 fixe de telle sorte qu'un actionneur selon l'invention peut fonctionner à pleine puissance.

Par ailleurs, la pluralité de fentes 12, 13 ménagées dans l'armature 3 fixe permet d'augmenter la résistance électrique du circuit magnétique, ce qui empêche la propagation des courants de Foucault. Dès lors, un actionneur selon l'invention possède un excellent rendement.

Selon un mode de réalisation particulièrement avantageux de l'invention, l'armature 4 mobile est discoïdale.

Cette armature 4 mobile discoïdale comprend, tel que représentée sur la figure 3, une face 22 agencée en regard de l'extrémité 11 d'entrefer de l'armature 3 fixe, une fois l'armature 4 mobile montée dans le corps 1 d'actionneur, et une face 23 opposée à la face 22 et parallèle à cette dernière. L'armature 4 mobile est adaptée pour être entraînée en translations alternatives le long de l'axe 7 d'actionneur.

Selon un mode avantageux de réalisation de l'invention, l'armature 4 mobile comprend également une pluralité de séries de fentes.

Selon le mode de réalisation de la figure 3, l'armature 4 mobile comprend trois séries de fentes, chaque fente de chaque série de fentes s'étendant sur toute la hauteur de l'armature 4 mobile entre ses faces 23, 24. Une première série de fentes 21 s'étend uniquement sur une portion radiale de l'armature, à partir de la périphérie de l'armature, qui représente de l'ordre de 33% du rayon de l'armature 4 mobile. Une deuxième série de fentes 24 s'étend uniquement sur une portion radiale de l'armature, à partir de la périphérie de l'armature, qui représente de l'ordre de 60% du rayon de l'armature 4 mobile. Une troisième série de fentes 25 s'étend uniquement sur une portion radiale de l'armature, à partir de la périphérie de l'armature, qui représente de l'ordre de 75% du rayon de l'armature 4 mobile.

Selon le mode de réalisation de la figure 3, deux paires de fentes 21 successives sont agencées respectivement de part et d'autre d'une fente 24 et d'une fente 25. Dès lors, selon ce mode de réalisation, la deuxième série de fentes 25 comprend autant de fentes que la troisième série de fentes 24. En revanche, la première série de fentes 21 comprend le double du nombre de fentes de la deuxième série de fentes 24 et de la troisième série de fentes 25.

Cette structure permet d'obtenir une armature 4 mobile résistante car les fentes 24 les plus nombreuses sont les plus courtes, c'est-à-dire, celles dont les découpes enlèvent le moins de matière à l'armature 4 mobile. Par ailleurs, l'armature comprend des fentes qui s'étendent radialement sur la presque totalité de l'armature de telle sorte que seule une petite portion centrale de l'armature dans laquelle l'induction passe ne comprend pas de fentes. Une telle structure permet ainsi de disposer d'une armature dans laquelle l'influence des courants de Foucault est négligeable tout en bénéficiant d'une résistance mécanique qui ne limite pas la puissance électromagnétique utilisable.

Selon le mode de réalisation de la figure 3, la portion centrale non fendue présente une dimension radiale de l'ordre de 10% du rayon de l'armature 4 mobile.

Selon ce mode de réalisation, deux fentes successives, quelle que soit la série dont elles dépendent, sont séparées d'un angle de 3,75°. Chaque paire de fentes adjacentes définit une lame d'armature. Selon le mode de réalisation de la figure 3, deux lames d'armatures adjacentes sont séparées d'un angle de 3,75°.

Néanmoins, selon d'autres modes de réalisation, le nombre de séries de fentes, les dimensions des fentes et l'agencement de ces dernières peuvent être différents.

Selon un mode de réalisation de l'invention, une ou plusieurs fentes d'une ou plusieurs séries de fentes peuvent être comblées par une résine, du type résine époxy, de manière à renforcer la tenue mécanique de l'actionneur.

L'armature 4 mobile présente un alésage axial central traversant dans lequel peut être logé, par exemple, le piston d'une pompe, de telle sorte que les déplacements de l'armature 4 mobile par rapport à l'armature 3 fixe entraîne le déplacement du piston de la pompe. Pour ce faire, l'alésage axial central présente selon le mode de réalisation de la figure 3 un rayon de l'ordre de 15 % du rayon de l'armature 3 mobile discoïdale.

Selon d'autres modes de réalisation, les fentes de l'armature fixe et de l'armature mobile peuvent être agencées différemment et présenter entre elles des écarts angulaires différents.

Néanmoins, selon un mode de réalisation particulièrement avantageux, les fentes sont réalisées de telle sorte que chaque lame d'armature définie par une portion d'armature agencée entre deux fentes adjacentes présente des dimensions adaptées pour que le premier mode propre en flexion de cette lame soit de fréquence supérieure à la fréquence de fonctionnement de l'actionneur.

Un actionneur selon l'invention peut fonctionner de façon optimale à des fréquences élevées, de l'ordre de 100 Hz à 300 Hz. Dès lors, les dimensions des lames d'armature sont avantageusement déterminées de telle sorte que les premiers modes de flexion dans l'axe de la plus petite et de la plus grande inertie soient, par exemple, respectivement de l'ordre de 1 000 Hz et de plus de 3 000 Hz.

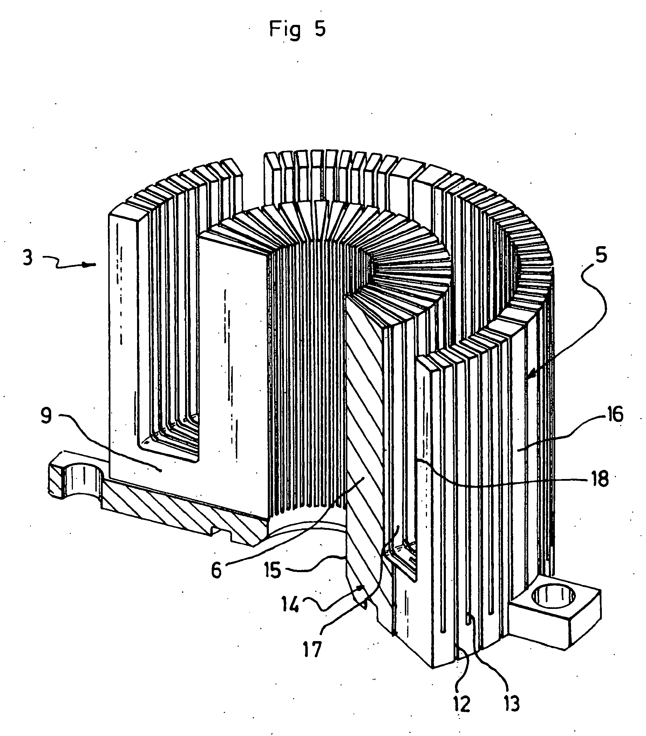

Pour ce faire, et tel que représenté sur les figures 2 et 5, les lames du cylindre 5 extérieur de l'armature 4 fixe définies par une paire de fentes -une fente 12 de la première série de fentes et une fente 13 de la seconde série de fentes- présente une dimension radiale de 3,25 mm, une dimension angulaire au niveau de la paroi 18 intérieure de 1 inm et une dimension angulaire au niveau de la paroi 16 extérieure de 1,25 mm. La hauteur d'une telle lame est définie par la hauteur des fentes qui, comme on la vu précédemment, est selon le mode de réalisation des figures 2 et 5, de 33 mm.

Selon le mode de réalisation des figures 2 et 5, les lames du cylindre 6 intérieur de l'armature 4 fixe définies par une paire de fentes 13 de la seconde série de fentes présente une dimension radiale de 8,25 mm, une dimension angulaire au niveau de la paroi 15 intérieure de 0,25 mm et une dimension angulaire au niveau de la paroi 17 extérieure de 1,5 mm. La hauteur d'une telle lame est définie par la hauteur des fentes qui, comme on la vu précédemment, est selon le mode de réalisation des figures 2 et 5, de 33 mm.

Bien entendu, d'autres dimensions permettent d'obtenir des lames dont le mode propre en flexion est supérieur à la fréquence de fonctionnement de l'actionneur. Ces derniers sont avantageusement déterminés par simulation.

Un actionneur selon l'invention peut également être prévu pour fonctionner en dehors de la plage de fréquences de 100Hz à 300 Hz.

Un actionneur selon l'invention peut être réalisé en différents types de matériaux, tel que l'acier inoxydable, l'acier XC 10, le fer doux, des matériaux nanocristallins, des alliages de métaux, etc.

Selon un mode particulièrement avantageux de l'invention, le noyau magnétique est réalisé en un alliage fer-nickel comprenant des proportions sensiblement identiques de fer et de nickel.

En effet, un tel alliage de métaux possède une très faible hystérésis associée à une induction à saturation relativement élevée.

De plus, un tel alliage fer-nickel procure un faible niveau d'induction rémanente. Dès lors, contrairement à ce qui se produit notamment avec des actionneurs comprenant des armatures en fer, une armature mobile réalisée avec un tel alliage fer-nickel ne vient pas se coller contre l'armature fixe en l'absence d'un courant dans le bobinage d'aimantation. En particulier, il n'est pas nécessaire, avec un actionneur selon l'invention comprenant des armatures réalisées avec un alliage fer-nickel en proportions sensiblement identiques, de limiter l'entrefer minimal de l'actionneur à une valeur de l'ordre de quelques centièmes de millimètres pour éviter de subir la force rémanente qui bloquerait tout mouvement de l'actionneur tant qu'une force suffisante ne serait pas appliquée. Un actionneur selon ce mode de réalisation offre ainsi une grande souplesse d'utilisation.

Un actionneur selon l'invention permet de développer dans un volume réduit une puissance importante.

Selon le mode de réalisation des figures, l'actionneur occupe un volume inférieur à 140 cm³ et permet de développer plus de 200N pour une course de 1 mm de l'armature mobile.

Dès lors, un actionneur selon l'invention est particulièrement adapté aux applications embarquées pour lesquelles une puissance par unité de volume importante est recherchée. Un actionneur selon l'invention présente une pluralité de fentes permettant de fortement limiter les courants de Foucault tout en préservant la structure mécanique rigide et résistante des armatures. Dès lors, un actionneur selon l'invention peut être utilisé à pleine puissance électrique sans risque de détérioration des armatures. Un actionneur selon l'invention est donc particulièrement adapté à des applications qui présentent des contraintes mécaniques importantes.

Un actionneur selon l'invention ne se limite pas aux seuls modes de réalisation décrits. En particulier, un actionneur selon l'invention peut comprendre un nombre différent de fentes, une architecture générale différente et un bobinage différent, sans néanmoins sortir de l'objet de la présente invention tel que défini dans les revendications.

## Revendications

1. Actionneur électromagnétique à reluctance variable comprenant :
- un corps (1) d'actionneur,
- une armature ferromagnétique fixée audit corps d'actionneur, dite armature (3) fixe, comprenant au moins deux cylindres de révolution concentriques, dits respectivement cylindre (6) intérieur et cylindre (5) extérieur, espacés radialement l'un de l'autre et s'étendant le long d'un axe, dit axe (7) d'actionneur, lesdits cylindres (5, 6) intérieur et extérieur étant reliés par une couronne (9) de liaison s'étendant dans un plan orthogonal audit axe (7) d'actionneur,
- au moins un bobinage (2) d'aimantation agencé entre lesdits cylindres (5, 6) intérieur et extérieur,
- au moins une armature (4) mobile ferromagnétique agencée en regard d'une extrémité axiale de ladite armature (3) fixe, dite extrémité (11) d'entrefer, ladite armature (4) mobile étant guidée en translations alternatives par rapport à ladite armature (3) fixe le long dudit axe (7) d'actionneur, avec laquelle elle définit un circuit magnétique avec un entrefer (20) dont la dimension varie au cours des translations alternatives de cette armature (4) mobile par rapport à l'armature (3) fixe,
ladite armature (3) fixe comprenant au moins deux séries de fentes, une première série de fentes (12) débouchant sur la paroi (18) intérieure et sur la paroi (16) extérieure du cylindre (5) extérieur et s'étendant sur toute la hauteur dudit cylindre (5) extérieur, et une deuxième série de fentes (13), chaque fente (13) de la deuxième série de fentes (13) étant intercalée entre deux fentes (12) de ladite première série de fentes (12) et les fentes (13) de la deuxième série de fentes (13) s'étendant radialement de la paroi (15) intérieure du cylindre (6) intérieur à la paroi (16) extérieure du cylindre (5) extérieur, uniquement sur une partie de la hauteur desdits cylindres (5, 6) à partir de chaque extrémité (11) d'entrefer de telle sorte que des portions non fendues de l'armature (3) fixe soient éloignées de l'entrefer (20).

2. Actionneur selon la revendication 1, **caractérisé en ce que** ladite première série de fentes (12) de ladite armature (3) fixe s'étend également sur une portion radiale de ladite couronne (9) d'extrémité, sur toute sa hauteur.

3. Actionneur selon l'une des revendications 1 ou 2, **caractérisé en ce que** ladite deuxième série de fentes (13) de ladite armature (3) fixe s'étend également radialement uniquement sur une partie de la hauteur de ladite couronne (9) de liaison.

4. Actionneur selon l'une des revendications 1 à 3 comprenant une seule armature (4) mobile agencée en regard d'une extrémité axiale de ladite armature (3) fixe, dite extrémité (11) d'entrefer, avec laquelle elle définit un circuit magnétique avec un seul entrefer (20), **caractérisé en ce que** lesdits cylindres (6) intérieur et (5) extérieur de ladite armature (3) fixe sont reliés par ladite couronne (10) de liaison, au niveau de l'extrémité axiale de ladite armature (3) fixe opposée à ladite extrémité (11) d'entrefer, dite extrémité (10) de liaison.

5. Actionneur selon l'une des revendications 1 à 4, **caractérisé en ce que** chaque fente de chaque série de fentes s'étend dans un plan radial parallèlement audit axe (7) d'actionneur.

6. Actionneur selon l'une des revendications 1 à 5, **caractérisé en ce que** chaque fente (13) de ladite deuxième série de fentes de ladite armature (3) fixe s'étend sur plus de 80% de la hauteur des cylindres (6) intérieur et (5) extérieur.

7. Actionneur selon l'une des revendications 1 à 6, **caractérisé en ce qu'**au moins une armature (4) mobile est discoïdale, présente un diamètre sensiblement égale au diamètre dudit cylindre (5) extérieur de ladite armature (3) fixe, et comprend au moins une première série de fentes (21) ménagées sur une majeure partie radiale de cette armature (4) mobile, sur toute la hauteur de cette armature (4) mobile, et **en ce que** chaque fente (21) de ladite première série de fentes d'au moins une armature (4) mobile s'étend radialement sur plus de 30 % du rayon de cette armature (4) mobile.

8. Actionneur selon la revendication 7, **caractérisé en ce qu'**au moins une armature (4) mobile comprend au moins une deuxième série de fentes (24) ménagées uniquement sur une partie radiale de cette armature (4) mobile sur toute la hauteur de cette armature (4) mobile, chaque fente (24) de ladite deuxième série de fentes de cette armature (4) mobile s'étendant radialement sur plus de 60 % du rayon de cette armature (4) mobile.

9. Actionneur selon l'une des revendications 7 ou 8, **caractérisé en ce qu'**au moins une armature (4) mobile comprend au moins une troisième série de fentes (25) ménagées uniquement sur une partie radiale de cette armature (4) mobile sur toute la hauteur de cette armature (4) mobile, chaque fente (25) de ladite troisième série de fentes de cette armature (4) mobile s'étendant radialement sur plus de 75 % du rayon de cette armature (4) mobile.

10. Actionneur selon l'une des revendications 1 à 9, **caractérisé en ce que** ladite armature (3) fixe est réalisée en un alliage fer-nickel comprenant du fer et du nickel en proportions sensiblement identiques, et **en ce qu'**au moins une armature (4) mobile est réalisée en un alliage fer-nickel comprenant du fer et du nickel en proportions sensiblement identiques.

11. Actionneur selon l'une des revendications 1 à 10, **caractérisé en ce que** chaque armature (4) mobile présente une épaisseur sensiblement égale à l'épaisseur de ladite couronne (9) de liaison reliant ledit cylindre (6) intérieur et ledit cylindre (5) extérieur.

12. Actionneur selon l'une des revendications 1 à 11, **caractérisé en ce que** pour chacune des armatures (3) fixe et (4) mobile, les fentes (12, 13, 21, 24, 25) sont réalisées de telle sorte que chaque portion d'armature entre deux fentes adjacentes, dite lame d'armature, présente des dimensions adaptées pour que le premier mode propre en flexion de cette lame soit de fréquence supérieure à la fréquence de fonctionnement de l'actionneur.

13. Actionneur selon l'une des revendications 1 à 12, **caractérisé en ce que** pour chacune des armatures (4) fixe et (3) mobile, lesdites fentes (12, 13, 21, 24, 25) sont uniformément réparties sur toute la périphérie de cette armature.

14. Actionneur selon la revendication 13, **caractérisé en ce que** deux fentes adjacentes dudit cylindre (5) extérieur sont séparées angulairement d'au moins 3°, notamment de 3,75°.

15. Actionneur selon les revendications 7 et 14 prises ensemble, **caractérisé en ce que** pour chaque armature (4) mobile, deux fentes adjacentes sont séparées angulairement d'au moins 3°, notamment de 3,75°.

## Claims

1. Electromagnetic actuator with variable reluctance, comprising:
- an actuator body (1),
- a ferromagnetic armature which is fixed to said actuator body, called the fixed armature (3), comprising at least two concentric cylinders of revolution, called the inner cylinder (6) and the outer cylinder (5) respectively, at a radial distance from each other and extending along an axis, called the actuator axis (7), said inner and outer cylinders (5, 6) being linked by a linking ring (9) which extends in an orthogonal plane to said actuator axis (7),
- at least one magnetisation winding (2), which is arranged between said inner and outer cylinders (5, 6),
- at least one ferromagnetic movable armature (4), which is arranged facing an axial termination of said fixed armature (3), called the air gap termination (11), said movable armature (4) being guided in reciprocating translations in relation to said fixed armature (3) along said actuator axis (7), with which it defines a magnetic circuit with an air gap (20), the size of which varies in the course of the reciprocating translations of this movable armature (4) in relation to the fixed armature (3),
said fixed armature (3) including at least two series of slits, a first series of slits (12) opening onto the inner surface (18) and onto the outer surface (16) of the outer cylinder (5) and extending over the whole height of said outer cylinder (5), and a second series of slits (13), each slit (13) of the second series of slits (13) being inserted between two slits (12) of said first series of slits (12), and the slits (13) of the second series of slits (13) extending radially from the inner surface (15) of the inner cylinder (6) to the outer surface (16) of the outer cylinder (5) only over a part of the height of said cylinders (5, 6), from each air gap termination (11), in such a way that the unslit portions of the fixed armature (3) are at a distance from the air gap (20).

2. Actuator according to Claim 1, **characterized in that** said first series of slits (12) of said fixed armature (3) extends also over a radial portion of said termination ring (9), over its whole height.

3. Actuator according to one of Claims 1 or 2, **characterized in that** said second series of slits (13) of said fixed armature (3) extends also radially over only part of the height of said linking ring (9).

4. Actuator according to one of Claims 1 to 3, comprising a single movable armature (4) which is arranged facing an axial termination of said fixed armature (3), called the air gap termination (11), with which it defines a magnetic circuit with a single air gap (20), **characterized in that** said inner (6) and outer (5) cylinders of said fixed armature (3) are linked by said linking ring (10), at the level of the axial termination of said fixed armature (3) opposite said air gap termination (11), called the linking termination (10).

5. Actuator according to one of Claims 1 to 4, **characterized in that** each slit of each series of slits extends in a radial plane parallel to said actuator axis (7).

6. Actuator according to one of Claims 1 to 5, **characterized in that** each slit (13) of said second series of slits of said fixed armature (3) extends over more than 80% of the height of the inner (6) and outer (5) cylinders.

7. Actuator according to one of Claims 1 to 6, **characterized in that** at least one movable armature (4) is discoidal, has a diameter which is approximately equal to the diameter of said outer cylinder (5) of said fixed armature (3), and includes at least one first series of slits (21) which are made on a greater radial part of this movable armature (4), over the whole height of this movable armature (4), and **in that** each slit (21) of said first series of slits of at least one movable armature (4) extends radially over more than 30% of the radius of this movable armature (4).

8. Actuator according to Claim 7, **characterized in that** at least one movable armature (4) includes at least one second series of slits (24), which are made only on a radial part of this movable armature (4) over the whole height of this movable armature (4), each slit (24) of said second series of slits of this movable armature (4) extending radially over more than 60% of the radius of this movable armature (4).

9. Actuator according to one of Claims 7 or 8, **characterized in that** at least one movable armature (4) includes at least one third series of slits (25), which are made only on a radial part of this movable armature (4) over the whole height of this movable armature (4), each slit (25) of said third series of slits of this movable armature (4) extending radially over more than 75% of the radius of this movable armature (4).

10. Actuator according to one of Claims 1 to 9, **characterized in that** said fixed armature (3) is implemented in an iron-nickel alloy comprising iron and nickel in approximately equal proportions, and **in that** at least one movable armature (4) is implemented in an iron-nickel alloy comprising iron and nickel in approximately equal proportions.

11. Actuator according to one of Claims 1 to 10, **characterized in that** each movable armature (4) has a thickness which is approximately equal to the thickness of said linking ring (9) which links said inner cylinder (6) and said outer cylinder (5).

12. Actuator according to one of Claims 1 to 11, **characterized in that** for each of the fixed (3) and mobile (4) armatures, the slits (12, 13, 21, 24, 25) are implemented in such a way that each portion of armature between two adjacent slits, called an armature leaf, has suitable dimensions so that the first fundamental mode of flexion of this leaf is of greater frequency than the operating frequency of the actuator.

13. Actuator according to one of Claims 1 to 12, **characterized in that** for each of the fixed (3) and mobile (4) armatures, said slits (12, 13, 21, 24, 25) are uniformly distributed over the whole periphery of this armature.

14. Actuator according to Claim 13, **characterized in that** two adjacent slits of said outer cylinder (5) are separated by an angle of at least 3°, in particular 3.75°.

15. Actuator according to Claims 7 and 14 taken together, **characterized in that** for each mobile armature (4), two adjacent slits are separated by an angle of at least 3°, in particular 3.75°.

## Patentansprüche

1. Elektromagnetischer Aktor mit variabler Reluktanz, der folgende Teile umfaßt:
- einen Aktorkörper (1),
- eine am besagten Aktorkörper befestigte ferromagnetische Bewehrung, die sogenannte fixe Bewehrung (3), die zumindest zwei konzentrische Umdrehungszylinder umfaßt, die Innenzylinder (6) beziehungsweise Außenzylinder (5) genannt werden, die einen radialen Abstand voneinander haben und sich entlang einer Achse, der sogenannten Aktorachse (7), erstrecken, wobei der besagte Innenzylinder (6) und der besagte Außenzylinder (5) durch einen Verbindungskranz (9) verbunden sind, der sich in einer orthogonalen Ebene zur besagten Aktorachse (7) erstreckt,
- zumindest eine Magnetisierungswicklung (2), die zwischen dem besagten Innenzylinder (6) und dem besagten Außenzylinder (5) gestaltet ist,
- zumindest eine mobile ferromagnetische Bewehrung (4), die vor einem axialen Ende der besagten fixen Bewehrung (3) gestaltet ist, das besagte Luftspaltende (11), wobei besagten mobile Bewehrung (4) in abwechselnden Translationsbewegungen gegenüber der besagten fixen Bewehrung (3) entlang der besagten Aktorachse (7) geführt wird, mit der sie einen Magnetkreis mit einem Luftspalt (20) bildet, dessen Dimension im Laufe der abwechselnden Translationen dieser mobilen Bewegung (4) gegenüber der fixen Bewehrung (3) variiert,
wobei die besagte fixe Bewehrung (3) mindestens zwei Reihen von Schlitzen umfaßt, eine erste Reihe von Schlitzen (12), die sich an die Innenfläche (18) und an die Außenfläche (16) des Außenzylinder (5) öffnen und sich über die gesamte Höhe des besagten Außenzylinders (5) erstrecken, und eine zweite Reihe von Schlitzen (13), wobei jeder Schlitz (13) der zweiten Reihe von Schlitzen (13) zwischen zwei Schlitzen (12) der besagten ersten Reihe von Schlitzen (12) zwischengesetzt ist, und daß die Schlitze (13) der zweiten Reihe von Schlitzen (13) sich radial von die Innenfläche (15) des Innenzylinder (6) bis die Außenfläche (16) des Außenzylinder (5) erstrecken und nur auf einem Teil der Höhe der besagten Zylinder (5, 6) ab jedem Ende (11) des Luftspalts, so daß die nicht geschlitzten Abschnitte der fixen Bewehrung (3) vom Luftspalt (20) entfernt sind.

2. Aktor nach Anspruch 1, **dadurch gekennzeichnet, daß** sich die besagte erste Reihe von Schlitzen (12) der besagten fixen Bewehrung (3) auch auf einem radialen Abschnitt des besagten Endkranzes (9) über seine ganze Höhe erstreckt.

3. Aktor nach einem beliebigen der vorstehenden Ansprüche 1 oder 2, **dadurch gekennzeichnet, daß** sich die besagte zweite Reihe von Schlitzen (13) der besagten fixen Bewehrung (3) ebenfalls radial nur auf einem Teil der Höhe des besagten Verbindungskranzes (9) erstreckt.

4. Aktor nach einem beliebigen der vorstehenden Ansprüche 1 bis 3, der eine einzige mobile Bewehrung (4) umfaßt, die vor einem axialen Ende der besagten fixen Bewehrung (3), dem besagten Luftspaltende (11), gestaltet ist, mit dem sie einen Magnetkreis mit einem einzigen Luftspalt (20) bildet, **dadurch gekennzeichnet, daß** der besagte Innenzylinder (6) und der besagte Außenzylinder (5) der besagten fixen Bewehrung (3) durch den besagten Verbindungskreis (10) in Höhe des axialen Endes der besagten fixen Bewehrung (3) entgegengesetzt zum besagten Luftspaltende (11), dem sogenannten Verbindungsende (10), verbunden sind.

5. Aktor nach einem beliebigen der vorstehenden Ansprüche 1 bis 4, **dadurch gekennzeichnet, daß** sich jeder Schlitz jeder Reihe von Schlitzen in einer radialen Ebene parallel zur besagten Aktorachse (7) erstreckt.

6. Aktor nach einem beliebigen der vorstehenden Ansprüche 1 bis 5, **dadurch gekennzeichnet, daß** sich jeder Schlitz (13) der besagten zweiten Reihe von Schlitzen der besagten fixen Bewehrung (3) auf über 80% der Höhe des Innenzylinders (6) und des Außenzylinders (5) erstreckt.

7. Aktor nach einem beliebigen der vorstehenden Ansprüche 1 bis 6, **dadurch gekennzeichnet, daß** zumindest eine mobile Bewehrung (4) diskusförmig ist, einen Durchmesser im Wesentlichen gleich dem Durchmesser des besagten Außenzylinders (5) der besagten fixen Bewehrung (3) aufweist und zumindest eine erste Reihe von Schlitzen (21) umfaßt, die auf einem großen radialen Teil dieser mobilen Bewehrung (4) auf der gesamten Höhe dieser mobilen Bewehrung (4) gestaltet sind, und dadurch, daß sich jeder Schlitz (21) der besagten ersten Reihe von Schlitzen von zumindest einer mobilen Bewehrung (4) radial auf über 30% des Radius dieser mobilen Bewehrung (4) erstreckt.

8. Aktor nach Anspruch 7, **dadurch gekennzeichnet, daß** zumindest eine mobile Bewehrung (4) zumindest eine zweite Reihe von Schlitzen (24) umfaßt, die nur auf einem radialen Teil dieser mobilen Bewehrung (4) auf der gesamten Höhe dieser mobilen Bewehrung (4) gestaltet sind, wobei sich jeder Schlitz (24) der besagten zweiten Reihe von Schlitzen dieser mobilen Bewehrung (4) radial auf über 60% des Radius dieser mobilen Bewehrung (4) erstreckt.

9. Aktor nach einem beliebigen der vorstehenden Ansprüche 7 oder 8, **dadurch gekennzeichnet, daß** zumindest eine mobile Bewehrung (4) zumindest eine dritte Reihe von Schlitzen (25) umfaßt, die nur auf einem radialen Teil dieser mobilen Bewehrung (4) auf der gesamten Höhe dieser mobilen Bewehrung (4) gestaltet sind, wobei sich jeder Schlitz (25) der besagten dritten Reihe von Schlitzen dieser mobilen Bewehrung (4) radial auf über 75% des Radius dieser mobilen Bewehrung (4) erstreckt.

10. Aktor nach einem beliebigen der vorstehenden Ansprüche 1 bis 9, **dadurch gekennzeichnet, daß** die besagte fixe Bewehrung (3) aus einer Eisen-NickelLegierung ausgeführt ist, die Eisen und Nickel in deutlich identischen Anteilen enthält, und dadurch, daß zumindest eine mobile Bewehrung (4) aus einer Eisen-Nickel-Legierung ausgeführt ist, die Eisen und Nickel in deutlich identischen Anteilen enthält.

11. Aktor nach einem beliebigen der vorstehenden Ansprüche 1 bis 10, **dadurch gekennzeichnet, daß** jede mobile Bewehrung (4) eine Dicke deutlich gleich der Dicke des besagten Verbindungskranzes (9) aufweist, der den besagten Innenzylinder (6) und den besagten Außenzylinder (5) verbindet.

12. Aktor nach einem beliebigen der vorstehenden Ansprüche 1 bis 11, **dadurch gekennzeichnet, daß** bei jeder Bewehrung, der fixen (3) und der mobilen (4), die Schlitze (12, 13, 21, 24, 25) so ausgeführt sind, daß jeder Abschnitt einer Bewehrung zwischen zwei nebeneinander liegenden Schlitzen, der sogenannte Bewehrungsstreifen, Abmessungen aufweist, die dazu geeignet sind, daß der erste eigene Modus in Biegung dieses Streifens eine höhere Frequenz als die Betriebsfrequenz des Aktors hat.

13. Aktor nach einem beliebigen der vorstehenden Ansprüche 1 bis 12, **dadurch gekennzeichnet, daß** bei jeder Bewehrung, der fixen (3) und der mobilen (4), die besagten Schlitze (12, 13, 21, 24, 25) gleichmäßig auf der gesamten Peripherie dieser Bewehrung verteilt sind.

14. Aktor nach Anspruch 13, **dadurch gekennzeichnet, daß** zwei nebeneinander liegende Schlitze des besagten Außenzylinders (5) um einen Winkel von mindestens 3 Grad und insbesondere um 3,75 Grad getrennt sind.

15. Aktor nach den Ansprüchen 7 und 14, die gemeinsam genommen werden, **dadurch gekennzeichnet, daß** bei jeder mobilen Bewehrung (4) zwei nebeneinander liegende Schlitze um einen Winkel von mindestens 3 Grad und insbesondere um 3,75 Grad getrennt sind.
